# FASCICULE DE BREVET EUROPEEN

(11) **EP 4 589 627 B1**
(45) Date de publication et mention de la délivrance du brevet: **07.10.2026**
(21) Numéro de dépôt: 25305055.3
(22) Date de dépôt: 16.01.2025
(51) Int. Cl.: H01H 71/08, H01R 9/26, H02B 1/20

(54) **PEIGNE DE RÉPARTITION HORIZONTALE**
HORIZONTALVERTEILKAMM
HORIZONTAL DISTRIBUTION COMB

(30) Priorité: 18.01.2024 FR 2400519
(43) Date de publication de la demande: 23.07.2025
(73) Titulaire: Legrand France, 87000 Limoges (FR); Legrand SNC, 87000 Limoges (FR)
(72) Inventeur: BREFFY, Sylvain, 87000 Limoges (FR); LAURENT, Frédéric, 87000 Limoges (FR); RASSE, Gaétan, 87000 Limoges (FR); POUCHIN, Elodie, 87000 Limoges (FR); MAYTRAUD, Frédéric, 87000 Limoges (FR)
(74) Mandataire: Santarelli

(56) Documents cités:
- EP-A1- 3 336 982
- EP-A1- 3 503 318
- EP-A1- 3 641 063

## Description

### DOMAINE TECHNIQUE DE L'INVENTION

L'invention concerne un peigne de répartition notamment de répartition horizontale, configuré pour interconnecter dans un tableau électrique un appareillage électrique principal, tel qu'un interrupteur différentiel, à des appareillages électriques secondaires, tels que des disjoncteurs.

L'invention concerne également un système électrique pourvu d'un appareillage électrique principal et d'appareillages électriques secondaires interconnectés à l'appareillage électrique principal à l'aide d'un ou plusieurs peignes de ce type, ainsi qu'un tableau électrique comportant au moins un tel système électrique.

### ÉTAT DE LA TECHNIQUE

Les tableaux électriques comportent souvent plusieurs rangées d'appareillages électriques, dont des appareillages électriques dits principaux, tel que des interrupteurs différentiels et des appareillages électriques dits secondaires, tels que des disjoncteurs, qui sont interconnectés aux appareillages électriques principaux.

Chaque rangée peut par exemple comporter des appareillages électriques secondaires disposés selon un écartement déterminé et un appareillage électrique principal en tête de rangée.

Les appareillages électriques principaux et secondaires présentent des bornes de connexion qui sont elles aussi disposées selon un écartement déterminé.

L'interconnexion électrique est réalisée à l'aide de peignes de répartition dite horizontale.

Chaque peigne est pourvu d'un corps rigide duquel saillent des dents rigides disposées à une distance déterminée les unes des autres et configurées pour être insérées dans les bornes de connexion des appareillages électriques principaux et secondaires.

Sur une rangée comportant un appareillage électrique principal et des appareillages électriques secondaires sont généralement disposés au moins deux peignes de répartition horizontale.

L'utilisation de tels peignes de répartition nécessite donc de disposer d'appareillages électriques dont les bornes de connexion présentent toutes un agencement prédéterminé identique ou en complémentarité d'agencement avec les dents des peignes.

Lorsqu'un appareillage électrique principal présente des bornes de connexion disposées selon un agencement prédéterminé différent de celui des appareillages électriques secondaires, une solution consiste à n'utiliser les peignes de répartition que sur les appareillages électriques secondaires et de disposer un accessoire de connexion complémentaire dédié pour interconnecter l'appareillage électrique principal et l'appareillage électrique secondaire immédiatement adjacent, lequel est aussi interconnecté aux peignes de répartition pour l'interconnexion des autres appareillages électriques secondaires.

Le document EP 3 336 982 A1 décrit un peigne de répartition selon le préambule de la revendication 1.

### EXPOSÉ DE L'INVENTION

L'invention concerne un peigne de répartition, notamment de répartition horizontale, qui soit particulièrement simple et commode à l'utilisation.

L'invention a ainsi pour objet, selon un premier aspect, un peigne de répartition configuré pour équiper un tableau électrique pour interconnecter au moins un appareillage électrique principal, tel qu'un interrupteur différentiel, à des appareillages électriques secondaires, tels que des disjoncteurs, disposés selon au moins un écartement déterminé, le peigne de répartition comportant :
une première portion de peigne s'étendant entre deux terminaisons opposées, et pourvue d'un corps rigide s'étendant entre les terminaisons et de dents rigides ménagées en saillie du corps rigide à au moins une distance déterminée les unes des autres correspondant à l'au moins un écartement déterminé, et configurées pour coopérer mécaniquement et électriquement avec des bornes de connexion secondaires des appareillages électriques secondaires ; et
une deuxième portion de peigne pourvue d'un organe de connexion électrique configuré pour coopérer mécaniquement et électriquement avec au moins une borne de connexion principale de l'au moins un appareillage électrique principal, et d'un tronçon de raccordement électrique souple et déformable configuré pour être assujetti mécaniquement et électriquement, par une première extrémité, à une des terminaisons de la première portion de peigne et, par une deuxième extrémité opposée à sa première extrémité, à l'organe de connexion électrique.

Le peigne de répartition selon l'invention comporte ainsi à la fois une première portion dite rigide qui permet d'interconnecter les appareillages électriques secondaires classiquement disposés selon un écart déterminé, et une deuxième portion dite souple et déformable qui permet d'interconnecter les appareillages secondaires à un appareillage principal, quelle que soit la position de la ou des bornes de connexion principales sur ce dernier.

En d'autres termes, le peigne de répartition selon l'invention est pourvu d'une part d'une première portion de peigne adaptée à interconnecter un agencement classique d'appareillages électriques secondaires dans un tableau électrique, où les bornes de connexion secondaires sont disposées selon un agencement et un écartement prédéterminés ; et d'autre part d'une deuxième portion de peigne adaptée à interconnecter les appareillages électriques secondaires à au moins un appareillage électrique principal, quel que soit l'agencement de sa ou ses bornes de connexion principales.

En effet, le tronçon de raccordement souple et déformable permet d'ajuster le positionnement de l'organe de connexion électrique en fonction de la position de la ou des bornes de connexion principales de l'appareillage électrique principal.

En particulier, le tronçon de raccordement électrique souple et déformable présente une longueur qui lui permet de positionner l'organe de connexion électrique à plusieurs positions et/ou distances de sa première extrémité, et donc de la terminaison du corps rigide de la première portion de peigne à laquelle ce tronçon de raccordement électrique souple et déformable est raccordé mécaniquement et électriquement.

Le peigne de répartition selon l'invention permet donc d'interconnecter les appareillages électriques secondaires classiquement disposés selon un écart déterminé avec différents types d'appareillages électriques principaux, quelle que soit la position de la ou des bornes de connexion principales sur ce dernier.

Le peigne de répartition selon l'invention peut donc s'adapter simplement à différents types d'agencements dans le tableau électrique.

Des caractéristiques préférées, simples, commodes et économiques du peigne de répartition selon l'invention sont présentées ci-après.

Le tronçon de raccordement électrique souple et déformable peut être formé par une tresse métallique.

Le tronçon de raccordement électrique souple et déformable peut venir de matière avec la première portion de peigne.

Le tronçon de raccordement électrique souple et déformable peut être assemblé par emboîtement, soudage, clinchage, vissage ou sertissage sur la terminaison du corps rigide de la première portion de peigne à laquelle est assujettie la deuxième portion de peigne.

L'organe de connexion électrique peut être formé par une dent rigide.

L'organe de connexion électrique peut être rapporté sur le tronçon de raccordement électrique souple et déformable.

L'organe de connexion électrique peut venir de matière avec le tronçon de raccordement électrique souple et déformable.

La deuxième portion de peigne peut être au moins partiellement recouverte d'une gaine isolante.

La première portion de peigne peut s'étendre globalement longitudinalement entre ses terminaisons.

L'invention a aussi pour objet, selon un deuxième aspect, un système électrique comportant un appareillage électrique principal, tel qu'un interrupteur différentiel, des appareillages électriques secondaires, tels que des disjoncteurs, disposés selon au moins un écartement déterminé, et au moins un peigne de répartition tel que décrit ci-dessus et configuré pour interconnecter l'appareillage électrique principal aux appareillages électriques secondaires.

Les appareillages électriques secondaires peuvent présenter des bornes de connexion secondaires disposées selon un agencement prédéterminé et écartées les unes des autres de distances secondaires prédéterminées.

L'appareillage électrique principal peut présenter au moins une borne de connexion principale disposée à une distance d'une borne de connexion secondaire la plus proche de la terminaison de la première portion de peigne à laquelle la deuxième portion de peigne est assujettie, qui est identique ou différente des distances secondaires prédéterminées.

L'appareillage électrique principal peut présenter des bornes de connexion principales disposées selon un agencement différent de l'agencement prédéterminé et écartées les unes des autres selon des distances principales identiques ou différentes des distances secondaires prédéterminées.

L'appareillage électrique principal peut être sélectionné parmi une pluralité d'appareillages électriques principaux présentant des bornes de connexion principales disposées différemment en fonction de l'appareillage électrique principal.

Le système électrique peut comporter une pluralité d'appareillages électriques secondaires à au moins deux bornes de connexion secondaires décalées selon une direction longitudinale, un appareillage électrique principal à au moins deux bornes de connexion principales, et deux peignes de répartition dont l'un des peignes de répartition est dédié à une première rangée de bornes de connexion secondaires et une première des au moins deux bornes de connexion principale, et l'autre des peignes de répartition est dédié à une deuxième rangée de bornes de connexion secondaires, décalée selon la direction longitudinale par rapport à la première rangée, et à une deuxième des au moins deux bornes de connexion principale.

Les première et deuxième bornes de connexion principales de l'appareillage électrique principal sont décalées l'une par rapport à l'autre selon la direction longitudinale, ou sont en ligne selon la direction longitudinale.

L'invention a également pour objet, selon un troisième aspect, un tableau électrique comportant au moins un système électrique tel que décrit ci-dessus et au moins un rail de montage sur lequel l'au moins un appareillage électrique principal et/ou les appareillages électriques secondaires sont assujettis mécaniquement par rangée, l'appareillage électrique principal étant en tête ou en queue de rangée.

### BRÈVE DESCRIPTION DES FIGURES

L'invention, selon un exemple de réalisation, sera bien comprise et ses avantages apparaitront mieux à la lecture de la description détaillée qui suit, donnée à titre indicatif et nullement limitatif, en référence aux dessins annexés.
La figure 1 représente schématiquement en perspective un tableau électrique pourvu d'un système électrique comportant un appareillage électrique principal et des appareillages électriques secondaires interconnectés par des peignes de répartition horizontale conformes à l'invention.
La figure 2 montre en perspective isolée le système électrique de la figure 1, selon un angle de vue différent.
La figure 3 est une vue en perspective isolée du peigne de répartition horizontale conforme à l'invention, mais dépourvu d'une gaine isolante.
La figure 4 est similaire à la figure 3, selon un angle de vue différent.
La figure 5 est une vue en perspective isolée du peigne de répartition horizontale conforme à l'invention, avec la gaine isolante.
La figure 6 est similaire à la figure 5, selon un angle de vue différent.
La figure 7 est une vue de détail de la figure 1, montrant l'interconnexion du peigne de répartition horizontale en particulier avec l'appareillage électrique principal.
La figure 8 est une vue de détail de la figure 2, montrant aussi l'interconnexion du peigne de répartition horizontale en particulier avec l'appareillage électrique principal.

### DESCRIPTION DÉTAILLÉE DE L'INVENTION

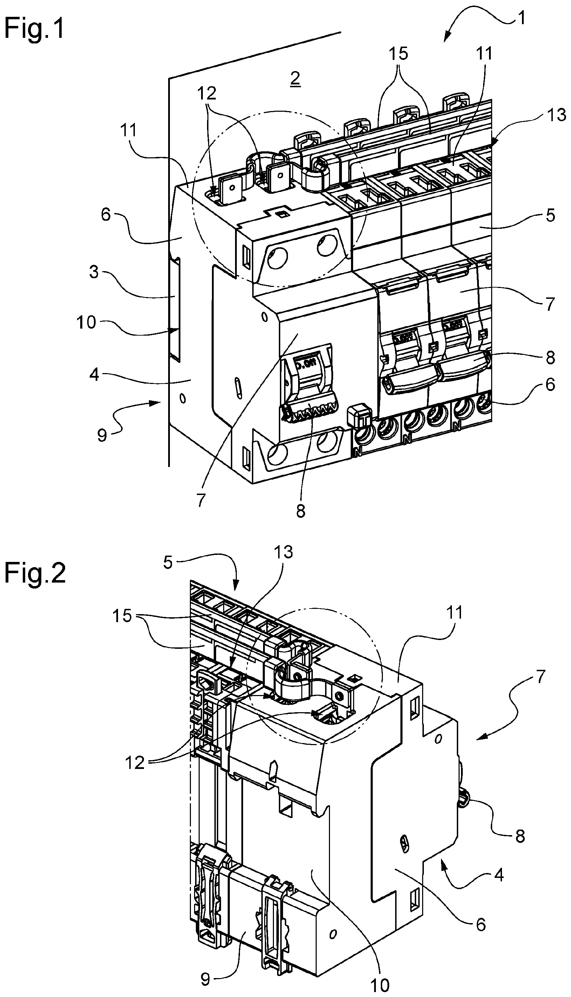

La figure 1 illustre schématiquement et partiellement un tableau électrique 1 présentant une paroi de fond 2 sur laquelle est assujetti mécaniquement un rail de montage 3.

Le tableau électrique 1 comporte en outre un système électrique ici formé par un appareillage électrique principal 4, du type interrupteur différentiel, et des appareillages électriques secondaires 5, du type disjoncteur, qui sont montés en rangée, selon une direction générale longitudinale, et assujettis mécaniquement sur le rail de montage 3.

L'appareillage électrique principal 4 est ici monté en tête de rangée.

Comme visible sur les figures 1 et 2, l'appareillage électrique principal 4 et les appareillages électriques secondaires 5 sont pourvus chacun d'un boîtier 6 présentant une face avant 7 de laquelle saille un levier de réarmement 8 actionnable notamment par un utilisateur, une face arrière 9 dans laquelle est ménagé un logement 10 configuré pour recevoir le rail de montage 3, et une face supérieure 11 dans laquelle sont formées des bornes de connexion principales 12 et respectivement des bornes de connexion secondaires 13.

Dans l'exemple illustré, les bornes de connexion principales 12 de l'appareillage électrique principal 4 sont disposées en ligne selon la direction longitudinale.

En d'autres termes, les bornes de connexion principales 12 de l'appareillage électrique principal 4 ne sont pas agencées de manière décalée les unes par rapport aux autres selon la direction longitudinale.

Au contraire, dans l'exemple illustré, les bornes de connexion secondaires 13 des appareillages électriques secondaires 5 sont agencées de manière décalée les unes par rapport aux autres selon la direction longitudinale pour former ici deux rangées de bornes de connexion secondaires 13.

Ainsi, une rangée de bornes de connexion secondaires 13 est ici globalement alignée avec une première des bornes de connexion principales 12 ; tandis que l'autre rangée de bornes de connexion secondaires 13 n'est pas alignée avec une deuxième des bornes de connexion principales 12 puisque les deux bornes de connexion principales 12 sont globalement alignées.

Les appareillages électriques secondaires 5 sont en outre disposés selon au moins un écartement déterminé, de sorte que les bornes de connexion secondaires 13 de chaque rangée de bornes de connexion secondaires 13 sont écartées les unes des autres de distances secondaires prédéterminées.

Les appareillages électriques secondaires 5 sont ici accolés les uns aux autres et l'appareillage électrique secondaire 5 immédiatement adjacent à l'appareillage électrique principal 4 est ici accolé à ce dernier.

Les bornes de connexion principales 12 de l'appareillage électrique principal 4 sont ici disposées en outre à une distance l'une de l'autre et aussi à une distance d'une des bornes de connexion secondaires 13 de l'appareillage électrique secondaire 5 immédiatement adjacent à l'appareillage électrique principal 4, qui peuvent être identiques ou différentes des distances secondaires prédéterminées.

Comme visible également sur les figures 1 et 2, le système électrique est pourvu en outre de plusieurs peignes de répartition 15, ici au nombre de deux, configurés pour interconnecter l'appareillage électrique principal 4 et les appareillages électriques secondaires 5 entre eux, par l'intermédiaire respectivement des bornes de connexion principales 12 et des bornes de connexion secondaires 13.

Les peignes de répartition 15 sont ici à répartition dite horizontale du fait de l'agencement horizontal de l'appareillage électrique principal 4 et des appareillages électriques secondaires 5 sur le rail de montage 3 et dans le tableau électrique 1.

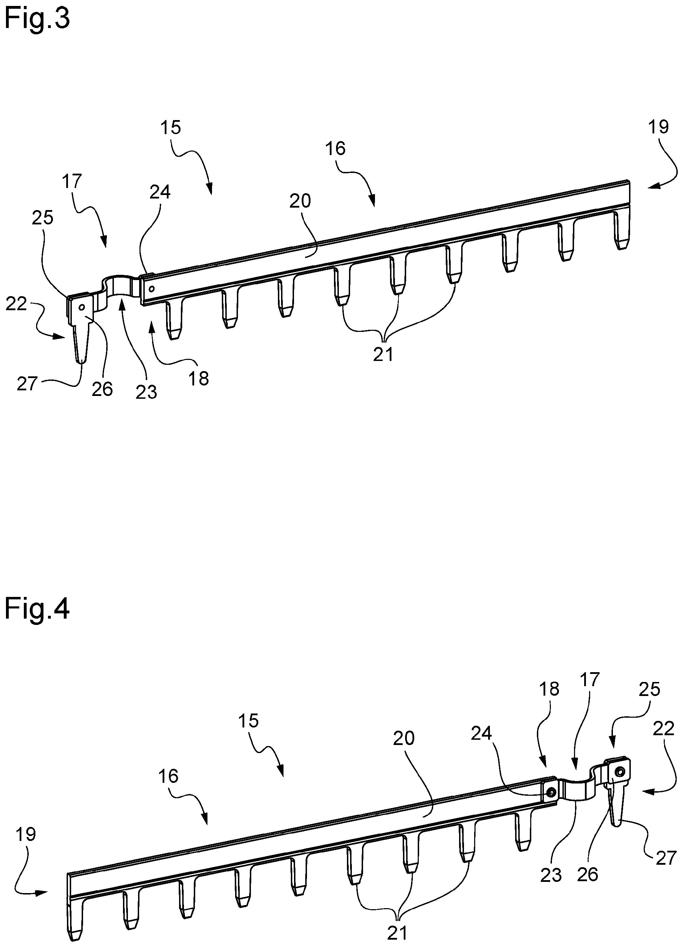

On va maintenant décrire plus en détail un des peignes de répartition 15 en référence aux figures 3 à 6 isolément.

Le peigne de répartition 15 comporte ici une première portion de peigne 16 et une deuxième portion de peigne 17 assujettie mécaniquement à la première position de peigne 16.

La première portion de peigne 16 s'étend globalement longitudinalement entre deux terminaisons opposées 18 et 19 et est pourvue d'un corps rigide 20, ici isolé par une gaine et qui s'étend entre les terminaisons 18 et 19, et de dents rigides 21 non isolées et ménagées en saillie du corps rigide 16.

Les dents 21 s'étendent globalement transversalement à la direction longitudinale dans laquelle s'étend la première portion de peigne 16.

Les dents 21 sont disposées à au moins une distance déterminée les unes des autres.

La deuxième portion de peigne 17 est pourvue d'un organe de connexion électrique 22 et d'un tronçon de raccordement électrique 23 souple et déformable et configuré pour être assujetti mécaniquement et électriquement, par une première extrémité 24, à une des terminaisons 18 de la première portion de peigne 16 et, par une deuxième extrémité 25 opposée à sa première extrémité 24, à l'organe de connexion électrique 22.

Le tronçon de raccordement électrique 23 souple et déformable est ici formé par une tresse métallique qui est rapportée et assemblée par sertissage sur la terminaison 18 du corps rigide 20 de la première portion de peigne 16 à laquelle est assujettie la deuxième portion de peigne 17.

L'organe de connexion électrique 22 est ici formé par une dent rigide présentant une portion de base 26 et une portion de connexion 27 en saillie de la portion de base 26.

L'organe de connexion électrique 22 est ici rapporté sur le tronçon de raccordement électrique 23 souple et déformable par exemple par sertissage de sa portion de base 26 avec la tresse métallique formant l'organe de connexion électrique 22.

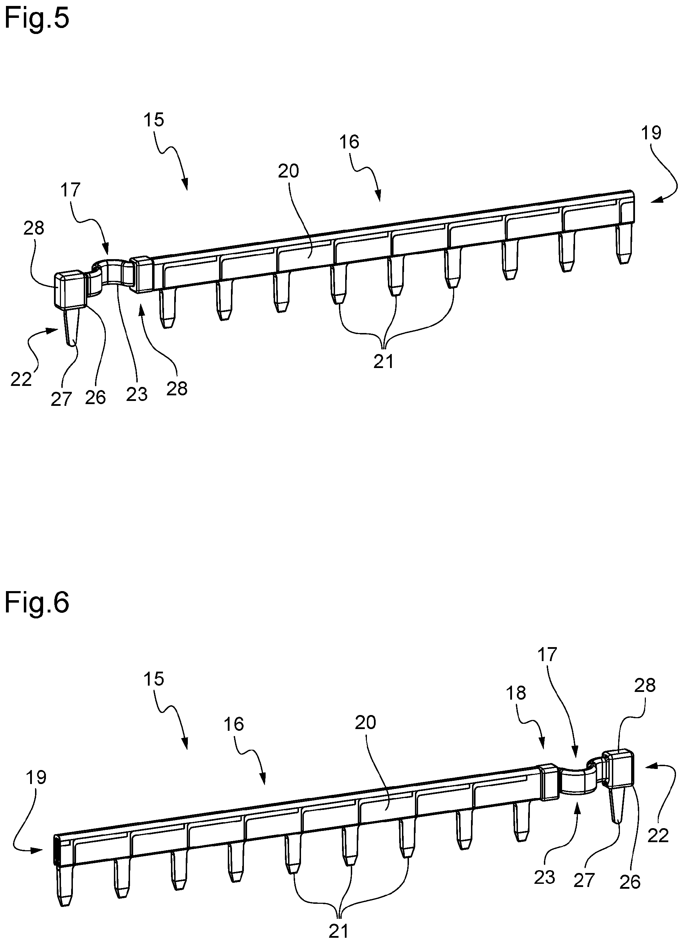

Sur les figures 3 et 4, la deuxième portion de peigne 17 est visible nue tandis que sur les figures 5 et 6, la deuxième portion de peigne 17 est partiellement recouverte d'une gaine isolante 28.

En particulier, la gaine isolante 28 recouvre le tronçon de raccordement électrique 23 et la portion de base 26 de l'organe de connexion électrique 22.

Ainsi, il est possible, par exemple par la préhension de la portion de base 26 qui est isolée, d'adapter la deuxième portion de peigne 17 en déformant le tronçon de raccordement électrique 23 souple et déformable, notamment pour réduire la distance entre la portion de connexion 27 de l'organe de connexion électrique 22 et la dent rigide 21 la plus proche de la terminaison 18 à laquelle est assujettie la deuxième portion de peigne 17, et/ou décaler la portion de connexion 27 de la dent rigide 21 la plus proche de la terminaison 18 pour l'aligner ou la désaligner selon la direction longitudinale.

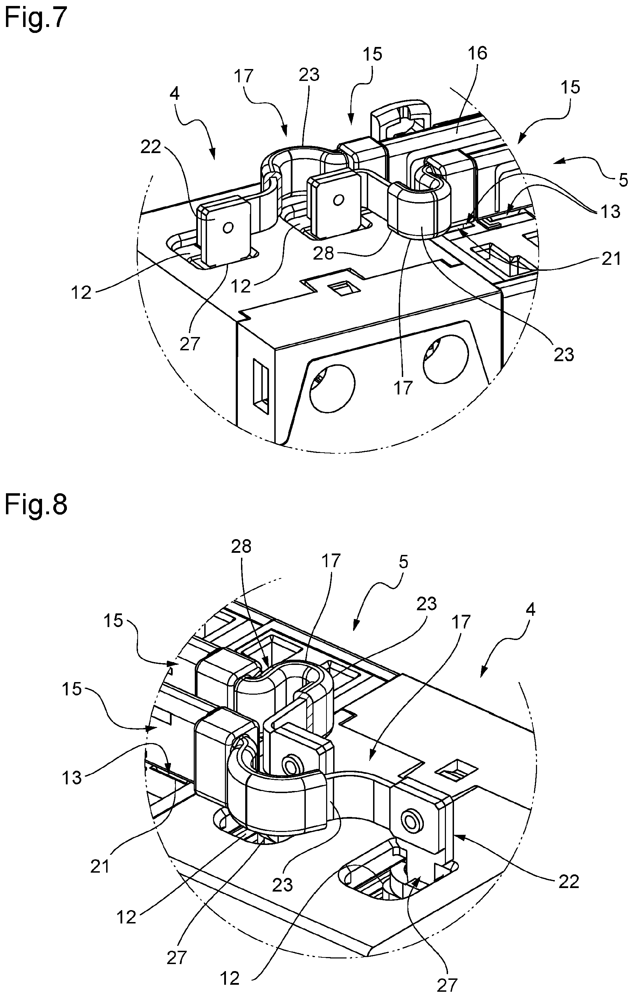

Les figures 7 et 8 sont des vues de détail des figures 1 et 2 qui montrent l'interconnexion des peignes de répartition 15 avec en particulier l'appareillage électrique principal 4 et au moins l'appareillage électrique secondaire 5 directement adjacent à l'appareil électrique principal 4.

L'un des deux peignes de répartition 15 est dédié à une première rangée de bornes de connexion secondaires 13 et à une première des deux bornes de connexion principales 12, et l'autre des deux peignes de répartition 15 est dédié à une deuxième rangée de bornes de connexion secondaires 13, décalée selon la direction longitudinale par rapport à la première rangée, et à une deuxième des deux bornes de connexion principales 12.

En particulier, les dents 21 de la première portion de peigne 16 de chaque peigne de répartition 15 sont configurées pour coopérer mécaniquement et électriquement avec une des deux rangées respectives de bornes de connexion secondaires 13 des appareillages électriques secondaires 5.

La distance déterminée séparant les dents 21 est fonction de l'écartement déterminé entre les appareillages électriques secondaires 5 et correspond donc aux distances secondaires prédéterminées entre les bornes de connexion secondaires 13.

Sur les figures 7 et 8, la deuxième portion de peigne 17 de chaque peigne de répartition 15 est partiellement dépourvue de la gaine isolante 28.

L'organe de connexion électrique 22 de la deuxième portion de peigne 17 de chaque peigne de répartition 15 est configuré pour coopérer mécaniquement et électriquement avec une des deux bornes de connexion principale 12 respective de l'appareillage électrique principal 4.

En particulier, le tronçon de raccordement électrique 23 souple et déformable permet de déplacer l'organe de connexion électrique 22 et de le positionner de sorte à insérer la portion de connexion 27 dans une des bornes de connexion principales 12 respectives.

Dans l'exemple illustré, il est visible que pour l'un des deux peignes de répartition 15, le tronçon de raccordement électrique 23 souple et déformable est quasiment complètement replié sur lui-même pour introduire la portion de connexion 27 de l'organe de connexion électrique 22 respectif dans la borne de connexion principale 12 la plus proche de l'appareillage électrique secondaire 5 immédiatement adjacent à l'appareillage électrique principal 4 ; tandis que pour l'autre des deux peignes de répartition 15, le tronçon de raccordement électrique 23 souple et déformable est plus étiré pour introduire la portion de connexion 27 de l'organe de connexion électrique 22 respectif dans la borne de connexion principale 12 la plus éloignée de l'appareillage électrique secondaire 5 immédiatement adjacent à l'appareillage électrique principal 4.

Des variantes non illustrées sont décrites ci-dessous.

Le tronçon de raccordement électrique souple et déformable peut venir de matière avec la première portion de peigne plutôt qu'être rapporté.

L'organe de connexion électrique peut venir de matière avec le tronçon de raccordement électrique souple et déformable plutôt qu'être rapporté.

L'appareillage électrique principal peut être monté en queue de rangée plutôt qu'en tête.

Les bornes de connexion principales de l'appareillage électrique principal peuvent être agencées de manière décalée selon la direction longitudinale.

Le tronçon de raccordement électrique souple et déformable peut être assemblé par emboîtement ou soudage ou clinchage ou vissage plutôt que sertissage sur la terminaison du corps rigide de la première portion de peigne à laquelle est assujettie la deuxième portion de peigne.

L'organe de connexion électrique déformable peut être assemblé par emboîtement ou soudage ou clinchage ou vissage plutôt que sertissage avec le tronçon de raccordement électrique souple et déformable.

Les peignes de répartition 15 décrits ci-dessus et dans les variantes non illustrées comportent ainsi à la fois une première portion de peigne 16 dite rigide qui permet d'interconnecter les appareillages électriques secondaires 5 classiquement disposés selon un écart déterminé, et une deuxième portion de peigne 17 dite souple et déformable qui permet d'interconnecter les appareillages électriques secondaires 5 à l'appareillage électrique principal 4, quelle que soit la position des bornes de connexion principales 12 sur ce dernier.

En d'autres termes, chaque peigne de répartition 15 est pourvu d'une part d'une première portion de peigne 16 adaptée à interconnecter un agencement classique d'appareillages électriques secondaires 5 dans le tableau électrique 1, où les bornes de connexion secondaires 13 sont disposées selon un agencement et un écartement prédéterminés ; et d'autre part d'une deuxième portion de peigne 17 adaptée à interconnecter les appareillages électriques secondaires 5 à l'appareillage électrique principal 4, quel que soit l'agencement de ses bornes de connexion principales 12.

En effet, le tronçon de raccordement 23 souple et déformable permet d'ajuster le positionnement de l'organe de connexion électrique 22 en fonction de la position des bornes de connexion principales 12 de l'appareillage électrique principal 4.

En particulier, le tronçon de raccordement électrique 23 souple et déformable présente une longueur qui lui permet de positionner l'organe de connexion électrique 22 à plusieurs positions et/ou distances de sa première extrémité 24, et donc de la terminaison 18 du corps rigide 20 de la première portion de peigne 16 à laquelle ce tronçon de raccordement électrique 23 souple et déformable est raccordé mécaniquement et électriquement.

L'appareillage électrique principal peut ainsi être sélectionné parmi une pluralité d'appareillages électriques principaux présentant des bornes de connexion principales disposées différemment en fonction de l'appareillage électrique principal.

Le peigne de répartition tel que décrit ci-dessus peut donc s'adapter simplement à différents types d'agencements dans le tableau électrique.

## Revendications

1. Peigne de répartition configuré pour équiper un tableau électrique (1) pour interconnecter un appareillage électrique principal (4), tel qu'un interrupteur différentiel, à des appareillages électriques secondaires (5), tels que des disjoncteurs, disposés selon au moins un écartement déterminé, le peigne de répartition (15) comportant :
une première portion de peigne (16) s'étendant entre deux terminaisons opposées (18, 19), et pourvue d'un corps rigide (20) s'étendant entre les terminaisons et de dents rigides (21) ménagées en saillie du corps rigide à au moins une distance déterminée les unes des autres correspondant à l'au moins un écartement déterminé et configurées pour coopérer mécaniquement et électriquement avec des bornes de connexion secondaires (13) des appareillages électriques secondaires ; et
une deuxième portion de peigne (17) pourvue d'un organe de connexion électrique (22) configuré pour coopérer mécaniquement et électriquement avec au moins une borne de connexion principale (12) de l'appareillage électrique principal, et
**caractérisé en ce que** la deuxième portion de peigne (17) est pourvue d'un tronçon de raccordement électrique (23) souple et déformable configuré pour être assujetti mécaniquement et électriquement, par une première extrémité (24), à une des terminaisons (18) de la première portion de peigne et, par une deuxième extrémité (25) opposée à sa première extrémité, à l'organe de connexion électrique (22).

2. Peigne de répartition selon la revendication 1, **caractérisé en ce que** le tronçon de raccordement électrique (23) souple et déformable est formé par une tresse métallique.

3. Peigne de répartition selon la revendication 1, **caractérisé en ce que** le tronçon de raccordement électrique (23) souple et déformable vient de matière avec la première portion de peigne (16).

4. Peigne de répartition selon l'une quelconque des revendications 1 à 3, **caractérisé en ce que** le tronçon de raccordement électrique (23) souple et déformable est assemblé par emboîtement, soudage, clinchage, vissage ou sertissage sur la terminaison (18) du corps rigide (20) de la première portion de peigne (16) à laquelle est assujettie la deuxième portion de peigne (17).

5. Peigne de répartition selon l'une quelconque des revendications 1 à 4, **caractérisé en ce que** l'organe de connexion électrique (22) est formé par une dent rigide.

6. Peigne de répartition selon l'une quelconque des revendications 1 à 5, **caractérisé en ce que** l'organe de connexion électrique (22) est rapporté sur le tronçon de raccordement électrique (23) souple et déformable.

7. Peigne de répartition selon l'une quelconque des revendications 1 à 5, **caractérisé en ce que** l'organe de connexion électrique (22) vient de matière avec le tronçon de raccordement électrique (23) souple et déformable.

8. Peigne de répartition selon l'une quelconque des revendications 1 à 7, **caractérisé en ce que** la deuxième portion de peigne (17) est au moins partiellement recouverte d'une gaine isolante (28).

9. Peigne de répartition selon l'une quelconque des revendications 1 à 8, **caractérisé en ce que** la première portion de peigne (16) s'étend globalement longitudinalement entre ses terminaisons (18, 19).

10. Système électrique comportant un appareillage électrique principal (4), tel qu'un interrupteur différentiel, des appareillages électriques secondaires (5), tels que des disjoncteurs, disposés selon au moins un écartement déterminé, et au moins un peigne de répartition (15) selon l'une quelconque des revendications 1 à 9 qui est configuré pour interconnecter l'appareillage électrique principal aux appareillages électriques secondaires.

11. Système électrique selon la revendication 10, **caractérisé en ce que** les appareillages électriques secondaires (5) présentent des bornes de connexion secondaires (13) disposées selon un agencement prédéterminé et écartées les unes des autres de distances secondaires prédéterminées, et l'appareillage électrique principal (4) présente au moins une borne de connexion principale (12) disposée à une distance d'une borne de connexion secondaire la plus proche de la terminaison (18) de la première portion de peigne (16) à laquelle la deuxième portion de peigne (17) est assujettie, qui est identique ou différente des distances secondaires prédéterminées.

12. Système électrique selon l'une des revendications 10 et 11, **caractérisé en ce que** l'appareillage électrique principal (4) est sélectionné parmi une pluralité d'appareillages électriques principaux présentant des bornes de connexion principales (12) disposées différemment en fonction de l'appareillage électrique principal.

13. Système électrique selon l'une quelconques revendications 10 à 12, comportant une pluralité d'appareillages électriques secondaires (5) à au moins deux bornes de connexion secondaires (13) décalées selon une direction longitudinale, un appareillage électrique principal (4) à au moins deux bornes de connexion principales (12), et deux peignes de répartition (15) dont l'un des peignes de répartition est dédié à une première rangée de bornes de connexion secondaires et une première des au moins deux bornes de connexion principale, et l'autre des peignes de répartition est dédié à une deuxième rangée de bornes de connexion secondaires, décalée selon la direction longitudinale par rapport à la première rangée, et à une deuxième des au moins deux bornes de connexion principale.

14. Système électrique selon la revendication 13, **caractérisé en ce que** les première et deuxième bornes de connexion principales (12) de l'appareillage électrique principal (4) sont décalées l'une par rapport à l'autre selon la direction longitudinale, ou sont en ligne selon la direction longitudinale.

15. Tableau électrique comportant au moins un système électrique selon l'une quelconque des revendications 10 à 14 et au moins un rail de montage (3) sur lequel l'au moins un appareillage électrique principal (4) et/ou les appareillages électriques secondaires (5) sont assujettis mécaniquement par rangée, l'appareillage électrique principal étant en tête ou en queue de rangée.

## Patentansprüche

1. Verteilkamm, der so ausgebildet ist, dass er eine elektrische Schalttafel (1) ausstattet, um ein Hauptstromgerät (4), wie einen Fehlerstromschutzschalter, mit Sekundärstromgeräten (5), wie Leistungsschaltern, zu verbinden, die in mindestens einem bestimmten Abstand angeordnet sind, wobei der Verteilkamm (15) Folgendes aufweist:
einen ersten Kammabschnitt (16), der sich zwischen zwei gegenüberliegenden Enden (18, 19) erstreckt und mit einem starren Körper (20), der sich zwischen den Enden erstreckt, und starren Zinken (21) versehen ist, die in mindestens einem bestimmten Abstand voneinander aus dem starren Körper hervorstehen, die mindestens einem bestimmten Abstand entsprechen, und ausgebildet sind, um mechanisch und elektrisch mit Sekundäranschlussklemmen (13) der Sekundärstromgeräte zusammenzuwirken; und
einen zweiten Kammabschnitt (17), der mit einem elektrischen Verbindungselement (22) versehen ist, das so ausgebildet ist, dass es mechanisch und elektrisch mit mindestens einer Hauptanschlussklemme (12) des Hauptstromgeräts zusammenwirkt, und
**dadurch gekennzeichnet, dass** der zweite Kammabschnitt (17) mit einem flexiblen und verformbaren elektrischen Verbindungsstück (23) versehen ist, der so ausgebildet ist, dass er mit einem ersten Ende (24) an eines der Enden (18) des ersten Kammabschnitts und mit einem zweiten Ende (25), das seinem ersten Ende gegenübersteht, an das elektrische Verbindungselement (22) mechanisch und elektrisch befestigt werden kann.

2. Verteilkamm nach Anspruch 1, **dadurch gekennzeichnet, dass** das flexible und verformbare elektrische Verbindungsstück (23) durch ein Metallgeflecht gebildet ist.

3. Verteilkamm nach Anspruch 1, **dadurch gekennzeichnet, dass** das flexible und verformbare elektrische Verbindungsstück (23) einstückig mit dem ersten Kammabschnitt (16) ausgebildet ist.

4. Verteilkamm nach einem der Ansprüche 1 bis 3, **dadurch gekennzeichnet, dass** das flexible und verformbare elektrische Verbindungsstück (23) durch Stecken, Schweißen, Clinchen, Schrauben oder Crimpen am Ende (18) des starren Körpers (20) des ersten Kammabschnitts (16), an dem der zweite Kammabschnitt (17) befestigt ist, zusammengefügt ist.

5. Verteilkamm nach einem der Ansprüche 1 bis 4, **dadurch gekennzeichnet, dass** das elektrische Verbindungselement (22) durch einen starren Zinken gebildet ist.

6. Verteilkamm nach einem der Ansprüche 1 bis 5, **dadurch gekennzeichnet, dass** das elektrische Verbindungselement (22) auf das flexible und verformbare elektrische Verbindungsstück (23) aufgebracht ist.

7. Verteilkamm nach einem der Ansprüche 1 bis 5, **dadurch gekennzeichnet, dass** das elektrische Verbindungselement (22) einstückig mit dem flexiblen und verformbaren elektrischen Verbindungsstück (23) ausgebildet ist.

8. Verteilkamm nach einem der Ansprüche 1 bis 7, **dadurch gekennzeichnet, dass** der zweite Kammabschnitt (17) mindestens teilweise mit einem Isoliermantel (28) überzogen ist.

9. Verteilkamm nach einem der Ansprüche 1 bis 8, **dadurch gekennzeichnet, dass** sich der erste Kammabschnitt (16) insgesamt längs zwischen seinen Enden (18, 19) erstreckt.

10. Elektrisches System mit einem Hauptstromgerät (4), wie einem Fehlerstromschutzschalter, Sekundärstromgeräten (5), wie Leistungsschaltern, die in mindestens einem bestimmten Abstand angeordnet sind, und mindestens einem Verteilkamm (15) nach einem der Ansprüche 1 bis 9, der so ausgebildet ist, dass er das Hauptstromgerät mit den Sekundärstromgeräten verbindet.

11. Elektrisches System nach Anspruch 10, **dadurch gekennzeichnet, dass** die Sekundärstromgeräte (5) Sekundäranschlussklemmen (13) aufweisen, die nach einer vorbestimmten Anordnung angeordnet und in vorbestimmten Sekundärabständen voneinander entfernt angeordnet sind, und das Hauptstromgerät (4) mindestens eine Hauptanschlussklemme (12) aufweist, die in einem Abstand von einer dem Ende (18) des ersten Kammabschnitts (16), der an dem zweiten Kammabschnitt (17) befestigt ist, am nächsten gelegenen Sekundäranschlussklemme angeordnet ist, der identisch oder unterschiedlich zu den vorbestimmten Sekundärabständen ist.

12. Elektrisches System nach einem der Ansprüche 10 und 11, **dadurch gekennzeichnet, dass** das Hauptstromgerät (4) aus einer Vielzahl von Hauptstromgeräten ausgewählt ist, die je nach Hauptstromgerät unterschiedlich angeordnete Hauptanschlussklemmen (12) aufweisen.

13. Elektrisches System nach einem der Ansprüche 10 bis 12, das eine Vielzahl von Sekundärstromgeräten (5) mit mindestens zwei in Längsrichtung versetzten Sekundäranschlussklemmen (13), ein Hauptstromgerät (4) mit mindestens zwei Hauptanschlussklemmen (12) und zwei Verteilkämmen (15) aufweist, wobei einer der Verteilkämme einer ersten Reihe von Sekundäranschlussklemmen und einer ersten von mindestens zwei Hauptanschlussklemmen, und der andere der Verteilkämme einer zweiten Reihe von Sekundäranschlussklemmen, die in Längsrichtung zur ersten Reihe versetzt ist, und einer zweiten von mindestens zwei Hauptanschlussklemmen zugeordnet ist.

14. Elektrisches System nach Anspruch 13, **dadurch gekennzeichnet, dass** die ersten und zweiten Hauptanschlussklemmen (12) des Hauptstromgeräts (4) in Längsrichtung zueinander versetzt sind oder in Längsrichtung in einer Linie stehen.

15. Schalttafel, die mindestens ein elektrisches System nach einem der Ansprüche 10 bis 14 und mindestens eine Montageschiene (3) aufweist, an der das mindestens eine Hauptstromgerät (4) und/oder die Sekundärstromgeräte (5) pro Reihe mechanisch befestigt sind, wobei das Hauptstromgerät am Reihenanfang oder -ende ist.

## Claims

1. A distribution comb configured to be fitted to an electrical board (1) for interconnecting a main electrical apparatus (4), such as a residual current device, to secondary electrical apparatuses (5), such as circuit breakers, arranged at at least one specified distance, the distribution comb (15) comprising:
a first comb portion (16) extending between two opposite ends (18, 19), and provided with a rigid body (20) extending between the ends and rigid teeth (21) protruding from the rigid body at at least one specified distance from each other, corresponding to the at least one specified distance, and configured to cooperate mechanically and electrically with secondary connection terminals (13) of the secondary electrical equipment; and
a second comb portion (17) provided with an electrical connection member (22) configured to mechanically and electrically cooperate with at least one main connection terminal (12) of the main electrical equipment, and
**characterised in that** the second comb portion (17) is provided with a flexible and deformable electrical connection section (23) configured to be mechanically and electrically secured, by a first end (24), to one of the ends (18) of the first comb portion and, by a second end (25) opposite its first end, to the electrical connection member (22).

2. The distribution comb according to claim 1, **characterised in that** the flexible and deformable electrical connection section (23) is formed by a metal braid.

3. The distribution comb according to claim 1, **characterised in that** the flexible and deformable electrical connection section (23) is made in one piece with the first comb portion (16).

4. The distribution comb according to any one of claims 1 to 3, **characterised in that** the flexible and deformable electrical connection section (23) is assembled by interlocking, welding, clinching, screwing or crimping to the end (18) of the rigid body (20) of the first comb portion (16) to which the second comb portion (17) is secured.

5. The distribution comb according to any one of claims 1 to 4, **characterised in that** the electrical connection member (22) is formed by a rigid tooth.

6. The distribution comb according to any one of claims 1 to 5, **characterised in that** the electrical connection member (22) is fastened to the flexible and deformable electrical connection section (23).

7. The distribution comb according to any one of claims 1 to 5, **characterised in that** the electrical connection member (22) is made in one piece with the flexible and deformable electrical connection section (23).

8. The distribution comb according to any one of claims 1 to 7, **characterised in that** the second comb portion (17) is at least partially covered by an insulating sheath (28).

9. The distribution comb according to any one of claims 1 to 8, **characterised in that** the first comb portion (16) extends generally longitudinally between its ends (18, 19).

10. An electrical system comprising a main electrical apparatus (4), such as a residual current device, secondary electrical apparatuses (5), such as circuit breakers, arranged at at least one specified distance, and at least one distribution comb (15) according to any one of claims 1 to 9, which is configured to interconnect the main electrical apparatus to the secondary electrical apparatuses.

11. The electrical system according to claim 10, **characterised in that** the secondary electrical apparatuses (5) have secondary connection terminals (13) arranged in a predetermined arrangement and spaced apart from each other by prespecified secondary distances, and the main electrical apparatus (4) has at least one main connection terminal (12) arranged at a distance from the secondary connection terminal nearest to the end (18) of the first comb portion (16) to which the second comb portion (17) is secured, which is identical to or different from the prespecified secondary distances.

12. The electrical system according to one of claims 10 and 11, **characterised in that** the main electrical apparatus (4) is selected from a plurality of main electrical apparatuses having main connection terminals (12) differently disposed according to the main electrical apparatus.

13. The electrical system according to any one of claims 10 to 12, comprising a plurality of secondary electrical apparatuses (5) having at least two secondary connection terminals (13) offset in longitudinal direction, a main electrical apparatus (4) having at least two main connection terminals (12), and two distribution combs (15), one of the distribution combs being dedicated to a first row of secondary connection terminals and a first of the at least two main connection terminals, and the other of the distribution combs being dedicated to a second row of secondary connection terminals, offset in longitudinal direction relative to the first row, and to a second of the at least two main connection terminals.

14. The electrical system according to claim 13, **characterised in that** the first and second main connection terminals (12) of the main electrical apparatus (4) are offset from one another along the longitudinal direction, or are in line along the longitudinal direction.

15. An electrical board comprising at least one electrical system according to any one of claims 10 to 14 and at least one mounting rail (3) to which the at least one main electrical apparatus (4) and/or the secondary electrical apparatuses (5) are mechanically attached per row, the main electrical apparatus being at the head or tail of the row.
